# FASCICULE DE BREVET EUROPEEN

(11) **EP 1 231 784 B1**
(45) Date de publication et mention de la délivrance du brevet: **26.10.2005**
(21) Numéro de dépôt: 02100118.5
(22) Date de dépôt: 08.02.2002
(51) Int. Cl.: H04N 5/76

(54) **Procédé de production d'une séquence audio ou vidéo et dispositif associé**
Ton- und Bild-Folgewiedergabeverfahren und Gerät dafür
Audio and video sequence reproduction method, and associated arrangement

(30) Priorité: 08.02.2001 FR 0101742
(43) Date de publication de la demande: 14.08.2002
(73) Titulaire: Sagem SA, 75015 Paris (FR)
(72) Inventeur: CUOQ, Jean Noèl, 92150, SURESNES (FR)
(74) Mandataire: Schmit, Christian Norbert Marie

(56) Documents cités:
- EP-A- 0 929 197

## Description

La présente invention a pour objet un procédé de production d'une séquence audio, ou vidéo, et son dispositif associé. Le domaine de l'invention est celui de la diffusion de programmes de télévision, plus particulièrement numérique, et des appareils récepteurs décodeurs qui y sont associés. L'invention vise plus particulièrement les appareils récepteurs décodeurs comportant des moyens d'enregistrement.

Un but de l'invention est de pouvoir produire des séquences audio ou vidéo, à partir de fichiers préenregistrés dans un appareil récepteur décodeur de programmes de télévision.

Dans l'état de la technique, on connaît des appareils récepteurs décodeur de télévision, notamment numériques, qui permettent d'effectuer des enregistrements sur un disque dur interne de l'appareil Un tel récepteur est décrit dans EP-A-09 29 197. De tels appareils sont notamment utilisés pour la mise en oeuvre de la technique dite du VVOD (Virtual Video On Demand, ou Vidéo sur demande virtuelle.) Cette technique consiste à enregistrer sur le décodeur de l'appareil un ou plusieurs films. Ce téléchargement est effectué durant une période pendant laquelle l'utilisateur n'utilise pas son appareil. Par exemple, le téléchargement s'effectue de nuit. Une fois ce téléchargement effectué, l'utilisateur a accès à une bande annonce des films qui ont été téléchargés. Il peut alors choisir, en fonction de la visualisation de ces bandes annonces, quel film il souhaite regarder.

Dans l'état de la technique les différents films sont téléchargés, par exemple, à un format MPEG. Cependant, l'utilisateur n'a pas directement accès à ces fichiers tant qu'il n'a pas acquitté un droit, que ce soit via un abonnement, un paiement par carte, ou autre. Pour pouvoir se décider, l'utilisateur souhaite pouvoir se faire une idée sur la nature des films qui ont été téléchargés pendant la nuit. Pour se faire, il peut visualiser les bandes annonces. Dans l'état de la technique, la visualisation de ces bandes annonce se fait grâce à des fichiers dits de bande annonce. Ces fichiers sont des fichiers eux aussi au format MPEG qui sont transmis en plus des films déjà téléchargés. Ces fichiers bande annonce correspondent donc à d'autres fichiers spécifiques, sur le disque dur, à la différence près que ces fichiers bande annonce sont librement, c'est à dire gratuitement, accessibles par l'utilisateur.

L'inconvénient majeur de cette solution est que, pour visualiser une bande annonce, il faut que celle-ci soit physiquement enregistrée, sous la forme d'un fichier vidéo, sur le disque dur de l'appareil. Cela provoque donc un encombrement au niveau de l'espace du disque dur, ainsi qu'un encombrement au niveau de la bande passante des moyens utilisés pour télécharger ladite bande annonce. Ainsi, si l'opérateur qui propose les films veut aussi proposer plusieurs bandes annonces pour un même film, il devra transférer autant de fichiers qu'il souhaite proposer de bande annonce.

Un autre problème se pose pour les appareils récepteurs décodeurs de télévision actuels. En effet, pour visualiser une séquence d'une émission, il faut forcément charger le fichier comportant cette séquence, et parcourir tout le fichier jusqu'à ce que l'on trouve cette séquence. Ces manoeuvres de parcours sont alors effectuées par l'utilisateur lui-même. Il n'est en particulier pas possible de prévoir des montages entre des séquences appartenant à plusieurs films par exemple. Ainsi dans l'état de la technique, il est impossible de visualiser un fichier qui correspondrait à une bande annonce de plusieurs films. Sauf si cette bande annonce était physiquement enregistrée sur le disque dur de l'appareil. Il aurait donc fallu que l'opérateur crée cette bande annonce, puis l'envoie afin qu'elle soit enregistrée sur le disque dur de tous les appareils des abonnés à l'opérateur.

L'invention résout ces problèmes en permettant de créer des bandes annonces, ou séquences audio vidéo, à partir de fichiers, audio et/ou vidéo, préenregistrés sur le disque dur. La séquence audio vidéo est alors produite à partir d'un fichier script, lui aussi enregistré sur le disque dur mais de taille très faible. Le fichier script décrit, avec des termes prédéterminés, la façon dont il faut extraire des morceaux des fichiers préenregistrés pour produire la séquence audio vidéo. Il est ainsi possible, à partir des fichiers préenregistrés et d'un script, dont l'encombrement sur le disque dur ne dépasse pas quelque kilooctets, de permettre à l'utilisateur de l'appareil de visualiser une ou plusieurs bandes annonces.

L'invention a donc pour objet un procédé de production selon la revendication 1 d'une séquence audio ou vidéo dans lequel:
- on enregistre sur un support de stockage au moins un premier fichier comportant des informations de la même nature que la séquence que l'on souhaite produire,
caractérisé en ce que:
- on enregistre, dans une mémoire, un deuxième fichier de description de la séquence à produire,
- on extrait des morceaux d'au moins le premier fichier, en fonction de commandes enregistrées dans le deuxième fichier,
- on assemble, selon des commandes enregistrées dans le deuxième fichier, les morceaux extraits pour composer la séquence.

L'invention a aussi pour objet un dispositif récepteur/décodeur de signaux de télévision mettant en oeuvre le procédé selon l'une des revendications 1 à 16.

L'invention sera mieux comprise à la lecture de la description qui suit et à l'examen des figures qui l'accompagnent. Celles-ci sont présentées à titre indicatif et nullement limitatif de l'invention. Les figures montrent :
- Figure 1 : une illustration de moyens utiles à la mise en oeuvre du procédé selon l'invention ;
- Figure 2a : une illustration d'étapes du procédé selon l'invention ;
- Figures 2b et 2c : Une illustration de l'occupation d'un écran de télévision lors de l'exécution du script exemple numéro 1 ;
- Figure 3 : une illustration de l'occupation d'un écran de télévision lors de l'exécution du script exemple numéro 2 ;
- Figure 4 : une illustration de l'occupation d'un écran de télévision lors de l'exécution du script exemple numéro 3 ;
- Figure 5 : une illustration de l'occupation d'un écran de télévision lors de l'exécution du script exemple numéro 4.

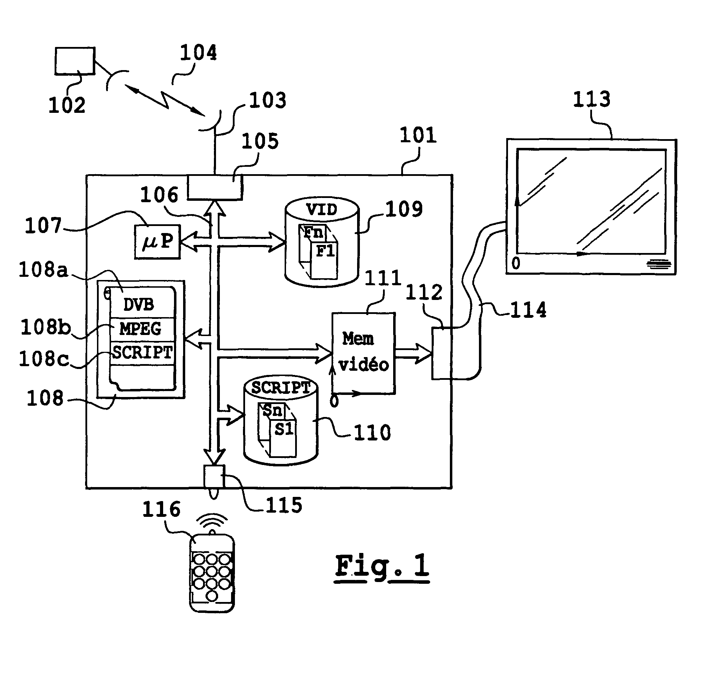

La figure 1 montre un appareil 101 récepteur décodeur de télévision. L'appareil 101 est connecté à un satellite 102 via une antenne 103. L'appareil 101 peut donc établir une liaison 104 hertzienne entre des moyens de diffusion d'un opérateur et des moyens de réception de l'appareil 101. L'antenne 103 est connectée à des moyens 105 de démodulation et de démultiplexage des signaux reçus via l'antenne 103. Dans la pratique, les moyens 105 sont des circuits électroniques. Il est tout à fait envisageable d'utiliser un autre mode de communication entre l'appareil 101 et un opérateur de diffusion de programme de télévision. Parmi ces modes de diffusion, on peut citer les diffusions câblées, de type XDSL, les diffusions câblées de type fibres optiques, ou encore les diffusions hertziennes standard à partir d'un relais standard de télévision. Le mode de connexion n'influe pas sur la mise en oeuvre du procédé selon l'invention.

Les moyens 105 coopèrent avec un bus 106 de l'appareil 101. Le bus 106 coopère aussi avec un microprocesseur 107 pour paramétrer les moyens 105 et récupérer des informations numériques produites par les moyens 105. Ces informations sont des données vidéo, par exemple au format MPEG, ainsi que des messages d'informations décrivant les informations vidéo. Ces messages d'information sont, par exemple, des EIT (Event Information Table, ou Table d'information sur l'événement) qui sont décrits par la norme DVB (Digital Video Broadcast, ou Diffusion vidéo numérique).

Le microprocesseur 107 exécute des actions, commandé par des codes instruction enregistrés dans une mémoire 108 de programme. La mémoire 108 est connectée au bus 106. La mémoire 108 comporte plusieurs zones. Chacune de ces zones comporte des codes instruction qui commandent le microprocesseur 107 lorsqu'il effectue des actions particulières. Une première zone 108A comporte des codes instruction correspondant à la mise en oeuvre de la norme DVB. Une deuxième zone 108B permet au microprocesseur 107 de produire des images à partir d'un fichier au format MPEG (Moving Pictures Expert Group, ou Groupe d'experts sur les images animées). Une troisième zone 108C permet au microprocesseur d'exécuter/interprêter un script selon l'invention.

La mémoire 108 comporte aussi d'autres zones non représentées, par exemple des zones de stockage de données et de travail temporaire.

L'appareil 101 comporte aussi une mémoire 109 de stockage. La mémoire 109 est par exemple un disque dur. Le disque dur 109 est connecté au bus 106. Le disque dur 109 comporte des fichiers vidéo film_1 à film_N. L'appareil 101 comporte aussi une mémoire 110 de stockage de scripts. Dans la pratique, la mémoire 109 et la mémoire 110 peuvent être un seul et même disque dur. Les mémoires 109 et 110 sont alors, dans ce cas, des zones distinctes de ce disque dur. La mémoire 110 comporte des scripts, par exemple S1 à SN. Chaque script est un fichier comportant des caractères au format ASCII (American Standard Code for International Interexchange, ou code standard américain pour les échanges internationales), et qui est divisé en un certain nombre de lignes. Une ligne est délimitée par un début de ligne et une fin de ligne. Un début de ligne est par exemple le début d'un fichier ou un caractère de fin de la ligne précédente. Une fin de ligne est un caractère, en général non affichable, de fin de ligne. Lorsqu'une application, chargée d'afficher sur un écran un fichier à ce format, tombe sur un caractère de fin de ligne, cela signifie qu'elle n'affiche pas ce caractère, mais qu'elle poursuit son affichage après être allée à la ligne, c'est à dire, qu'elle poursuit son écriture en dessous de la ligne qu'elle avait précédemment écrite.

Chaque ligne d'un fichier script correspond à une commande, ou instruction, qui est exécutée par le microprocesseur 107, lui-même commandé par les codes instruction de la zone 108C. Les codes instruction de la zone 108C correspondent en fait à un interpréteur de script. Cela s'oppose à des programmes qui serait compilés. La structure décrite pour le fichier script n'est pas limitative. On peut envisager un fichier script où chaque instruction serait délimitée par un caractère. C'est le cas pour le ';' dans le langage C, ou le langage PHP.

L'appareil 101 comporte une mémoire 111 vidéo. Lorsque le microprocesseur 107 commandé par des codes instruction de la mémoire 108 produit des images, il écrit ces images dans la mémoire 111 via le bus 106. La mémoire 111 est aussi connectée à un connecteur 112, par exemple au format Péritel. Le connecteur 112 comporte des moyens de scrutation de la mémoire 111, et des moyens pour produire un signal vidéo compatible avec le format Péritel. Il est ainsi possible de connecter un appareil 113 de visualisation à l'appareil 101 via un câble 114 Péritel. Ainsi des images produites par le microprocesseur 107, et écrites dans la mémoire 111, sont visualisées par l'utilisateur de l'appareil 101 sur l'appareil 113. D'autres modes de connexion, par exemple numériques, sont envisageables entre l'appareil 101 et l'écran 113.

L'appareil 101 comporte aussi des moyens 115 de réception infrarouge. Cela permet à l'utilisateur de l'appareil 101 d'utiliser une télécommande 116 pour commander l'appareil 101. Les moyens 115 comportent donc au moins une diode réceptrice infrarouge, ainsi que des moyens pour convertir les signaux infrarouges, reçus par la diode, en signaux numériques qui sont accessibles via le bus 106.

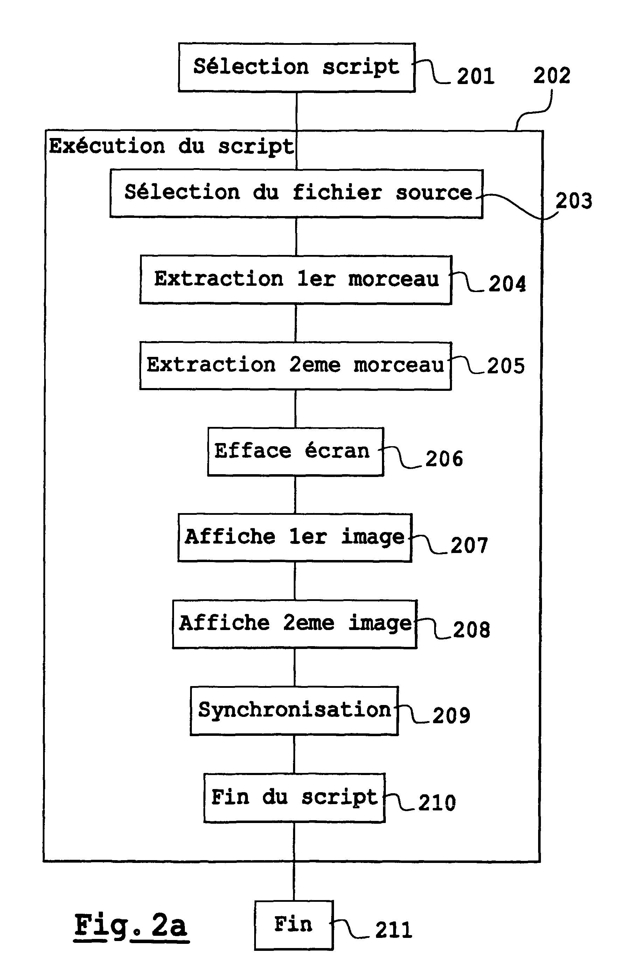

La figure 2a montre une étape 201 préliminaire de sélection du script. Cette sélection est effectuée par l'utilisateur à l'aide de la télécommande 116, ou par une application de gestion de la VVOD par exemple. L'utilisateur commence par provoquer l'affichage sur l'écran 113 de l'ensemble, ou une partie, des scripts enregistrés dans la mémoire 110. Chaque script est un fichier et comporte donc un nom. La présentation des scripts se fait, par exemple, en affichant sur l'écran 113 les noms des scripts. Chaque script étant un fichier, il peut aussi avoir une extension. Par exemple un fichier correspondant à un script se présente sous la forme Nom_script.SPT.

Dans ce cas, c'est Nom_script qui sera affiché sur l'écran 113, l'extension, à savoir SPT, aura servi à détecter que ce fichier était un script.

Une fois une liste de scripts affichée sur l'écran 113 l'utilisateur utilise des touches de la télécommande 116 pour sélectionner l'un des scripts. Lorsqu'il en a choisi un, il le valide avec une touche de la télécommande 116. On passe alors à une étape 202 d'interprétation du script.

L'état 202 correspond en fait au fichier d'exemple de script numéro S1.

### SCRIPT S1

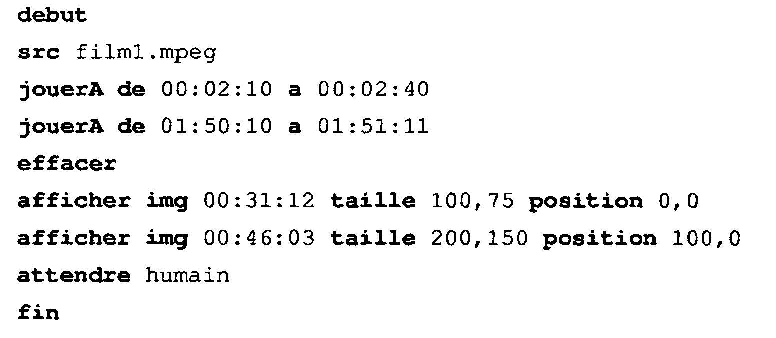

On passe de l'étape 201 à l'étape 203 de sélection du fichier source. L'étape 203 correspond à la deuxième ligne de l'exemple script 1. Cette ligne comporte une instruction de sélection d'un fichier source. Dans notre exemple, cette instruction est SRC. Le fichier source est alors Film1.mpeg. On rappelle que les fichiers script sont enregistrés dans la mémoire 110 alors que les fichiers, vidéo, sont enregistrés dans la mémoire 109. Cette instruction signifie que toutes les instructions d'extraction d'informations qui vont suivre seront à effectuer sur le fichier dont le nom est Film1.MPEG. Cette instruction est précédée par une instruction début qui est en fait facultative. Son intérêt est de permettre de délimiter le début du script. Cette instruction début pourrait aussi être accompagnée d'un nom pour le script.

On passe à une étape 204 d'extraction du premier morceau. L'étape 204 correspond à la troisième ligne du script S1. Cette troisième ligne comporte une instruction 'jouerA' suivie de paramètres. Cette instruction 'jouerA' est en faite une commande d'introduction. Les paramètres de cette commande sont 'de 00 : 02 : 10 à 00 : 02 : 40'. Cela signifie que le microprocesseur, commandé par les codes instruction de la zone 108C, va extraire du fichier Film1.MPEG le morceau allant de la date (de début) 2 minutes 10 à la date (de fin) 2 minutes 40, et jouer ce morceau. Les dates, de début et de fin, sont exprimées relativement au début du fichier. Ainsi la date '00 : 00 : 00' correspond à la première image d'un fichier vidéo. Dans le contexte de l'invention, 'jouer' signifie que le microprocesseur, commandé par des codes instruction de la zone 108B, décode le morceau extrait, et produit des images qui sont écrites dans la mémoire 111 vidéo, donc visualisées sur l'écran 113. Le fait d'utiliser l'instruction 'jouerA' signifie aussi que le microprocesseur 107 interprétant le script S1, attend la fin de l'exécution de l'instruction 'jouerA' avant de passer à l'instruction suivante.

Dans une variante de l'invention, le paramètre de la commande d'introduction comporte une date de début, et une durée. La date de fin est alors obtenue en additionnant la durée à la date de début.

On passe de l'étape 204 à une étape 205 d'extraction d'un deuxième morceau. L'étape 205 correspond à la quatrième ligne du script S1. L'étape 205 est similaire à l'étape 204, si ce n'est que le morceau à extraire va de la date 1 heure 50 minutes et 10 secondes à la date 1 heure 51 minutes et 11 secondes. On passe alors à une étape 206 d'effacement de l'écran. L'étape 206 correspond à la ligne 5 du script S1, et à l'instruction 'effacer'. Dans cette étape, le microprocesseur 107 efface l'écran, c'est-à-dire, réinitialise le contenu de la mémoire 111. Cette réinitialisation consiste, soit à écrire dans la mémoire 111 une image ayant une seule couleur, blanche, bleue, noire, ou autre. Soit à écrire dans la mémoire 111 une image prédéterminée.

De l'étape 206 on passe à l'étape 207 d'affichage de la première image. L'étape 207 correspond à la sixième ligne du script S1. La sixième ligne du script 1 comporte une instruction 'afficher' suivie d'un certain nombre de paramètres. L'instruction 'afficher' indique au microprocesseur qu'il va devoir afficher une image, en l'écrivant dans la mémoire 111. Un premier paramètre, de l'instruction 'afficher', est le paramètre 'img' suivi d'une date. Cela indique quelle image du fichier Film1.mpeg doit être affichée. Un deuxième paramètre, 'taille', indique dans quelle dimension doit être affichée l'image. Un troisième paramètre, Position, indique la position à laquelle l'image devra être affichée sur l'écran 113. L'ordre des paramètres n'a pas d'importance. Il suffit que le microprocesseur, interprétant l'instruction, puisse déterminer la signification des valeurs paramètres de l'instruction.

Les paramètres 'taille' et 'position' sont relatifs à un repère, par exemple orthonormé, utilisé pour repérer un point dans la mémoire 111, c'est-à-dire aussi sur l'écran 113. Dans notre exemple, on considère que l'origine du repère est située en bas à gauche de l'écran, et que l'écran a une définition horizontale de 800 points et une définition verticale de 600 points. Cela signifie que le point en bas à gauche de l'écran 113 a les coordonnées (0; 0). Le point en haut à droite de l'écran 113 a les coordonnées (800; 600). Les points auxquels nous faisons référence sont aussi souvent appelés 'pixel', pour Picture Element ou Elément d'image. La ligne 6 du script S1 signifie donc que le microprocesseur 107 affiche l'image correspondant à la date 31 minutes et 12 secondes du fichier Film1.mpeg, que la dimension de cette image sera de 100 x 75, et qu'elle sera affichée à la position origine (coordonnées (0 ; 0)) du repère. La position indiquée pour l'image correspond, par exemple, à son coin inférieur gauche.

On passe alors à une étape 208 d'affichage de la deuxième image. L'étape 208 est identique à l'étape 207, si ce n'est que ce n'est pas la même image qui est extraite du fichier Film1.MPEG. Cette deuxième image n'est pas affichée avec la même taille ni à partir de la même position.

On passe alors à une étape 209 de synchronisation. L'étape 209 correspond à la ligne 8 du script S1. Cette ligne comporte une instruction 'Attendre', suivie d'un paramètre. Dans cet exemple le paramètre est 'Humain'. Cela signifie en fait que le microprocesseur attend une sollicitation de la part de l'utilisateur de l'appareil 101 pour poursuivre l'exécution du script. Cette sollicitation peut être, par exemple, l'appui sur une touche de la télécommande 116.

Lorsque l'utilisateur appuie sur une touche de la télécommande 116 on passe alors à une étape 210 de fin du script S1. Le microprocesseur 107 peut alors soit effacer l'écran soit laisser afficher la dernière image qui était inscrite, ou alors présenter à l'utilisateur la liste des scripts comme pour l'étape 201. La liste de ces possibilités n'est pas exhaustive. De l'étape 210, on passe à une étape 211 de fin qui correspond à une utilisation autre de l'appareil 101 par son utilisateur.

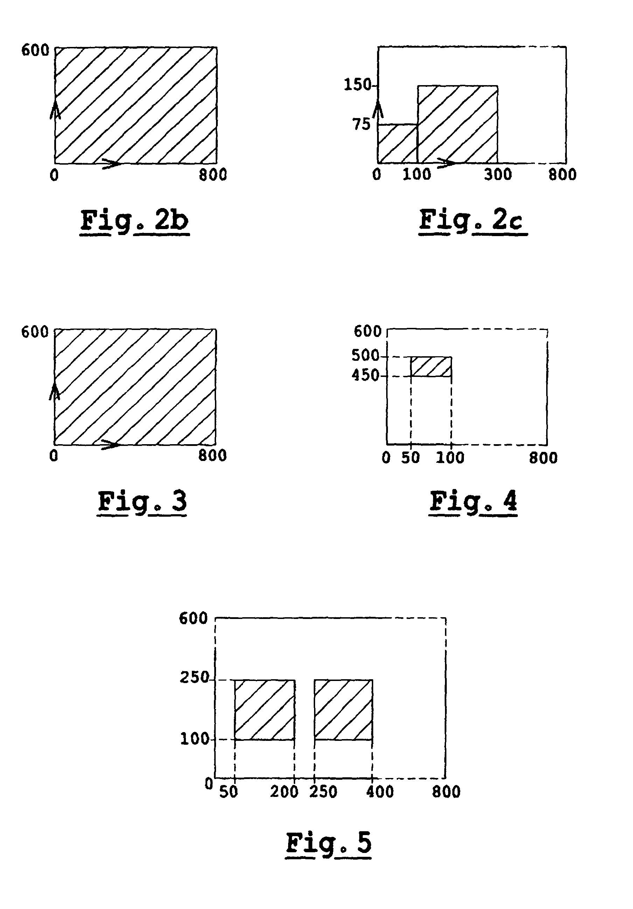

Le script S1 correspond donc à la visualisation, séquentielle, de deux morceaux du fichier Film1.MPEG, suivie de l'affichage, simultané, de deux images extraites de ce film. Cet affichage perdure jusqu'à une action de l'utilisateur. La figure 2b montre que lors de l'exécution/interprétation des instructions correspondant aux lignes 3 et 4 du script S1, c'est l'ensemble de l'écran 113 qui est occupé. La figure 2c montre que pour l'exécution/interprétation des lignes 6 et 7 du script S1, seule une partie de l'écran 113 est occupée. Cette partie correspond à l'affichage des deux images. Il faut donc être prudent lors de l'écriture des scripts afin de ne pas spécifier des positions, ou des tailles, qui feraient se superposer deux images. Bien entendu, cette superposition peut être volontaire.

### Exemple: SCRIPT S2

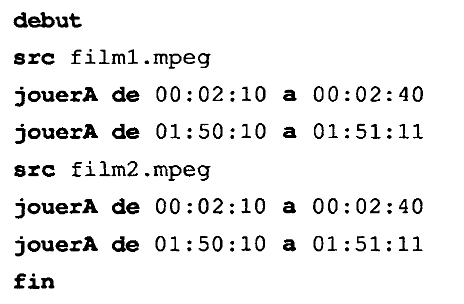

Le script S2 permet de visualiser, séquentiellement, des extraits de deux fichiers différents. La deuxième ligne du script S2 sélectionne le fichier Film1.MPEG comme fichier source. La deuxième ligne du script S2 extrait et joue sur l'écran 113 un morceau allant de la date 2 minutes 10 à la date 2 minutes 40. Puis on joue un morceau allant de 1 heure 50 et 10 secondes à 1 heure 51 et 11 secondes. L'instruction suivante, correspondant à la ligne 5, sélectionne un nouveau fichier comme fichier source. Cette instruction de la ligne 5 est suivie de deux instructions permettant d'extraire, du nouveau fichier, et de jouer des morceaux allant de la date 2 minutes 10 à la date 2 minutes 40, puis de la date 1 heure 50 minutes et 10 secondes à la date 1 heure 51 minutes et 11 secondes.

Un script tel que le script S2 permet donc, de visualiser un ou plusieurs extraits, de un ou plusieurs fichiers source. Un tel script permet donc de présenter, par exemple, un ensemble de films qui ont été téléchargés pendant la nuit. En effet le nombre de lignes d'un script n'est pas limité, si ce n'est par la capacité mémoire de l'appareil 101.

La figure 3 montre que lors de l'exécution du script 2 la totalité de la surface de l'écran 113 est occupée.

Ainsi, si pendant la nuit, l'utilisateur a téléchargé quatre films sur le disque 109 de l'appareil 101, cet appareil peut aussi avoir téléchargé un script permettant de présenter ces quatre films. Un tel script comportera alors au moins quatre instructions de sélection, telles que celles de la ligne 2 ou 5 du script S2. Ces instructions permettent de sélectionner les fichiers source à partir desquels sont exécutées les instructions 'jouerA' et/ou 'afficher'.

### Exemple: SCRIPT S3

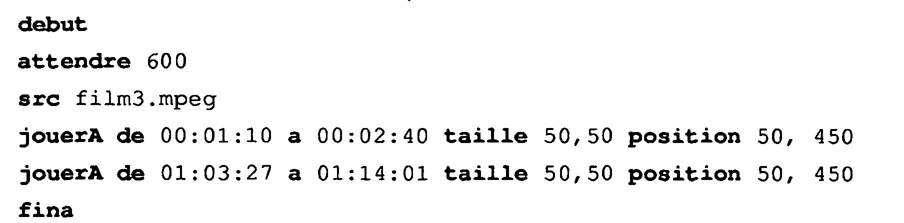

La ligne 2 du script S3 comporte une instruction 'attendre' suivi du paramètre 600. Cela signifie que le microprocesseur 107 attend 600 secondes avant de passer à l'instruction suivante. L'unité de la valeur qui suit l'instruction 'attendre' est ici la seconde. Cette unité a été choisie arbitrairement. Dans la pratique, cela pourrait être les millisecondes. Dans ce cas, l'instruction serait Attendre 600 000. L'unité peut aussi être spécifiée sur la ligne. Dans ce cas, l'instruction serait 'attendre 600 s'.

Le microprocesseur 107 va alors attendre 10 minutes avant de passer à l'exécution de la ligne suivante. La ligne 3 du script S3 correspond à la sélection d'un fichier source. Ici, le fichier Film3.mpeg est sélectionné.

Les lignes 4 et 5 du script S3 correspondent à des instructions 'jouerA'. Chacune des lignes 4 et 5 comporte, cette fois, une instruction spécifiant une taille et une position. Par exemple, pour la ligne 4 la taille est 50,50 ce qui signifie un carré de 50 pixels sur 50 pixels. La position est 50,450. Cela signifie que l'extrait, allant de la date 1 minute 10 à la date 2 minutes 40 du film Film3.MPEG, sera affiché dans un carré de dimension 50 pixels x 50 pixels, et à une position de 50 x 450 sur l'écran 113. Cet affichage se produira 600 secondes après le début de l'exécution du script S3. L'exécution de la ligne 4 du script 3 est suivie de l'exécution de la ligne 5 correspondant à l'extraction d'un autre morceau du fichier Film3.MPEG affiché avec les mêmes paramètres que pour la ligne 4. Dans la pratique ces paramètres peuvent être différents d'une ligne à l'autre.

La figure 4 montre que l'exécution/interprétation du script 3 modifie l'affichage d'une portion de l'écran 113. Cette portion est un carré de 50 pixels x 50 pixels, dont le bord inférieur gauche est situé à des coordonnées de 50 x 450 dans le repère prédéfini.

Un script tel que le script 3 est utilisé, par exemple, pour produire un journal télévisé élaboré. Ce journal correspond à un fichier Journal.MPEG. Au moment où la lecture de ce fichier Journal.MPEG est lancée, on lance simultanément l'exécution du script 3. Cela signifie que 600 secondes après le début de la lecture du fichier journal.mpeg il y aura une incrustation dans l'image, sur l'écran 113, correspondant à des morceaux du fichier Film3.MPEG. Si l'utilisateur est intéressé par ces morceaux, il pourra alors par la suite accéder directement au fichier Film3.MPEG pour le visualiser en totalité.

### Exemple: SCRIPT S4

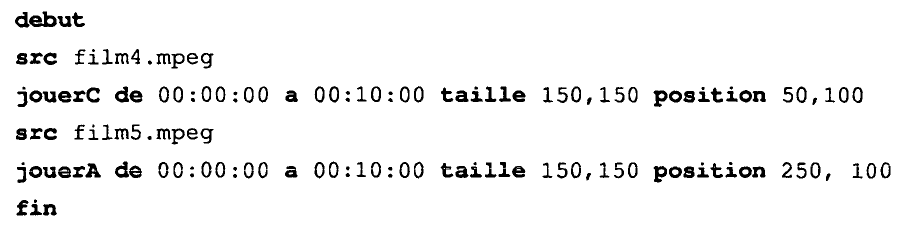

Le script 4 illustre un emploi de l'instruction 'jouerC'. Cette instruction est similaire à l'instruction 'jouerA', si ce n'est que le microprocesseur 107 n'attend pas la fin de l'exécution de l'instruction 'jouerC' pour passer à l'interprétation de l'instruction suivante. La ligne 2 du script S4 permet donc de sélectionner le fichier Film4.MPEG comme fichier source. La ligne suivante comporte une instruction 'jouerC', suivie des dates de la séquence à extraire, ainsi que des paramètres de taille et de position. Le microprocesseur 107 va donc interpréter la ligne 3 du fichier script S4, c'est-à-dire extraire du fichier Film4.MPEG le morceau allant du début à la date 10 minutes, et l'afficher dans un cadre de dimensions 150 x 150, à la position 50 x 100. Puis, sans attendre que la séquence ait été complètement lue, il passe à l'exécution de la ligne 4 du fichier script S4. La ligne 4 permet de sélectionner un nouveau fichier source, le fichier Film5.MPEG. La ligne 5 comporte une instruction 'jouerA' suivie de paramètres pour extraire le morceau du fichier Film5.MPEG, ainsi que de paramètres de taille et de position. Ces paramètres de taille et de position correspondent à un cadre de 150 x 150 pour une position de 250 x 100.

La figure 5 montre l'occupation de l'écran 113 lors de l'exécution du script S4. Cette occupation correspond à deux cadres de dimensions 150 x 150 affichés, cote à cote, sur l'écran 113. Un script, tel que le script S4, permet donc d'afficher simultanément des extraits de deux fichiers différents. Il est à noter qu'un script tel que le script S4 peut aussi servir à afficher simultanément plus de deux fichiers. On note aussi que l'on peut afficher simultanément plusieurs extraits du même fichier.

Grâce à l'invention, il est donc possible de produire, à partir de fichiers audio/vidéo préenregistrés, des séquences audio/vidéo. Une séquence audio correspondrait à des fichiers source audio. Ces séquences sont élaborées en fonction de paramètres de taille, et de position, rapportés à un repère permettant de repérer tous les points de l'écran 113. Les scripts selon l'invention comportent donc des instructions. Ces instructions sont de différentes natures. On trouve des instructions de type 'Jouer' ('jouerA', 'jouerC') qui correspondent à l'extraction d'un morceau d'un fichier vidéo (audio) et au fait de jouer ce morceau. Il existe aussi des instructions de sélection d'une source ('src'), des instructions d'affichage ('afficher') d'images extraites d'un fichier vidéo, des instructions de synchronisation ('attendre') permettant de cadencer l'exécution du script. Un script peut aussi comporter des instructions d'appel ('appeler') d'un autre script. Cela signifie qu'au cours de l'exécution d'un script, le microprocesseur 107 va en exécuter un autre qui aura été désigné dans le premier script.

Les instructions 'jouer' et 'appeler' précédemment citées peuvent à leur tour être de deux natures. Soit l'instruction indique qu'il faut attendre la fin de son exécution avant de passer à l'instruction suivante, par exemple l'instruction 'jouerA'. Soit l'instruction indique qu'il ne faut pas attendre la fin de son exécution avant de passer à l'exécution de l'instruction suivante, par exemple l'instruction 'JouerC'. Il en va de même pour les instructions d'appel à des scripts. En effet, le microprocesseur peut soit attendre la fin de l'exécution du script appelé avant de passer à l'exécution de l'instruction suivante du script appelant, soit exécuter les deux scripts, appelé et appelant, simultanément. Cela permet de réaliser des présentations relativement complexes sur l'écran 113, à partir de fichiers audio/vidéo préenregistrés sur le disque 109. Dans tous les cas de figure, les fichiers scripts décrivant ces présentations seront bien moins volumineux qu'un fichier, par exemple au format MPEG, qui aurait dû être transmis pour réaliser cette présentation sans l'aide d'un script.

On note que les noms des instructions choisis pour les besoins de la description ne sont pas le fond de l'invention. Ces instructions pourrait avoir d'autre noms, et permettre de réaliser les mêmes fonctions.

On note que pour l'invention, on a décrit des scripts et utilisé indifféremment les verbes 'exécuter' et 'interpréter' pour décrire le fait que ces scripts comportent des instructions qui sont exécutées par le microprocesseur 107. Dans une variante de l'invention, ces scripts sont compilés. Cela permet d'obtenir des scripts de taille plus faible, donc plus faciles à transmettre.

Dans l'invention, on considère que l'utilisateur de l'appareil 101 n'a pas accès, en écriture, à la mémoire 110. Dans une variante de l'invention, on établit une différence entre des scripts téléchargés, et des scripts écrits par l'utilisateur. Les scripts téléchargés ne peuvent pas être modifiés par l'utilisateur. L'utilisateur ne peut que commander leur exécution.

Les scripts écrits par l'utilisateur sont, par exemple, enregistrés dans une mémoire différente de celle ou sont enregistrés les scripts téléchargés. Lors de l'exécution d'un script écrit par l'utilisateur, le microprocesseur 107 vérifie, pour chaque instruction 'src', que l'utilisateur à bien le droit d'accéder au fichier audio/vidéo désigné dans le paramètre de l'instruction. Ce droit est, par exemple, assujetti au paiement d'une redevance.

Dans une autre variante de l'invention, on produit un fichier vidéo lors de l'interprétation du script. C'est-à-dire que le microprocesseur 107 ne va pas écrire les images, qu'il extrait conformément aux instructions du script, dans la mémoire 111, mais les écrire dans un fichier vidéo. L'utilisateur aura alors spécifié le nom de ce fichier, ou le nom de ce fichier est précisé dans le script téléchargé. Cette spécification se fait, par exemple, par une instruction située en tête du script,: **dest** mon_fichier.mpeg

Lorsque le microprocesseur tombe sur cette instruction, cela signifie que toutes les images produites, selon le script contenant cette instruction, devront être séquentiellement écrites dans le fichier mon_fichier.mpeg, et non plus dans la mémoire 111. Le fichier vidéo ainsi produit pourra par la suite être sélectionné par l'utilisateur afin d'être visualisé sur l'écran 113.

Dans une variante, on peut spécifier plusieurs destinations pour les images produites, notamment un fichier et la mémoire 111: **dest** mon_fichier.mpeg stdout

Dans ce cas, le fichier mon_fichier.mpeg est créé, et en même temps les images, extraites selon le script, sont écrites dans la mémoire 111. C'est-à-dire, les images extraites sont enregistrés dans un fichier, et visualisées sur l'écran 113. Le terme 'stdout' est utilisé pour Standard Output, c'est à dire sortie standard.

Dans cette variante, lorsque l'instruction 'dest' n'est pas spécifiée dans le script, on considère que la destination des images est par défaut la mémoire 111 vidéo.

L'invention est particulièrement utile dans un contexte de diffusion payante de films. Le téléchargement des films, et des scripts selon l'invention, s'effectue pendant la nuit. L'utilisateur a accès, en lecture, aux scripts pour se faire une idée des films. Si un film lui plaît, il peut alors acquitter un droit qui lui permettra d'accéder directement à tout le contenu de ce film, et non plus seulement aux morceaux décrits par le script présentant le film. Ce droit peut lui être accordé, par exemple, par la réception de messages permettant la visualisation de tout le film. Un tel message est par exemple un script permettant de visualiser tout le film.

Ce droit peut aussi lui être accordé par la transmission d'un code débloquant l'accès au film, ou par tout autre moyen existant ou à venir dans le domaine de l'acquittement de droit et de la télédiffusion.

## Revendications

1. Procédé (201-211) de production d'une séquence audio ou vidéo dans lequel:
- on enregistre sur un support de stockage (109) au moins un premier fichier comportant des informations audio ou vidéo selon la nature de la séquence que l'on souhaite produire,
**caractérisé en ce que**:
- on enregistre, dans une mémoire (110), un deuxième fichier de script de commandes décrivant la séquence à produire,
- on extrait (204 - 208) des morceaux d'au moins le premier fichier, en fonction de commandes enregistrées dans le deuxième fichier,
- on assemble (203-210), selon des commandes enregistrées dans le deuxième fichier, les morceaux extraits pour composer la séquence.

2. Procédé selon la revendication 1, **caractérisé en ce que** le premier fichier comporte des données audio.

3. Procédé selon l'une des revendications 1 ou 2, **caractérisé en ce que** le premier fichier comporte des données vidéo.

4. Procédé selon l'une des revendications 1 à 3, **caractérisé en ce que** le deuxième fichier comporte une commande (203) pour spécifier le premier fichier.

5. Procédé selon l'une des revendications 1 à 4, **caractérisé en ce que** le deuxième fichier comporte au moins une commande (204) d'introduction décrivant un morceau du premier fichier à extraire de ce premier fichier pour l'introduire dans le séquence produite.

6. Procédé selon la revendication 5, **caractérisé en ce qu'**un morceau du premier fichier est décrit par une date de début et une date de fin.

7. Procédé selon la revendication 5, **caractérisé en ce qu'**un morceau du premier fichier est décrit par une date de début et une durée relativement à cette date de début.

8. Procédé selon l'une des revendications 5 à 7, **caractérisé en ce que** le deuxième fichier comporte un commande pour spécifier des dimensions selon lesquelles afficher le contenu du morceau du premier fichier.

9. Procédé selon l'une des revendications 1 à 8, **caractérisé en ce qu'**on exécute plusieurs commandes d'introduction en même temps.

10. Procédé selon l'une des revendications 5 à 9, **caractérisé en ce que** le deuxième fichier comporte un commande pour spécifier des coordonnées selon lesquelles afficher le contenu du morceau du premier fichier.

11. Procédé selon l'une des revendications 1 à 10, **caractérisé en ce que** le deuxième fichier comporte une commande pour afficher une image du premier fichier.

12. Procédé selon la revendication 11, **caractérisé en ce que** une commande pour afficher une image comporte des paramètres définissant la dimension de l'image et sa position sur un écran.

13. Procédé selon l'une des revendications 1 à 12, **caractérisé en ce que** le deuxième fichier comporte une commande de synchronisation pour cadencer l'exécution des commandes.

14. Procédé selon l'une des revendications 1 à 13, **caractérisé en ce que** le deuxième fichier comporte plusieurs commandes exécutées de manière séquentielle, dans leur ordre d'apparition dans le deuxième fichier.

15. Procédé selon l'une des revendications 1 à 14, **caractérisé en ce que** la séquence produite est enregistrée dans un troisième fichier.

16. Procédé selon l'une des revendications 1 à 15, **caractérisé en ce que** la séquence produite est directement visualisée sur un écran.

17. Dispositif récepteur/décodeur de signaux de télévision mettant en oeuvre le procédé selon l'une des revendications 1 à 16.

## Patentansprüche

1. Verfahren (201-211) zur Erzeugung einer Audio- oder Videosequenz, bei welchem:
- auf einem Speichermedium (109) wenigstens eine erste Datei aufgezeichnet wird, die Audio- oder Videoinformationen entsprechend der Art der Sequenz enthält, die erzeugt werden soll,
**dadurch gekennzeichnet, dass**:
- in einem Speicher (110) eine zweite Datei aus Kommandozeilen aufgezeichnet wird, welche die zu erzeugende Sequenz beschreibt,
- aus mindestens der ersten Datei Teile extrahiert werden (204-208), in Abhängigkeit von in der zweiten Datei aufgezeichneten Befehlen,
- die extrahierten Teile, entsprechend den in der zweiten Datei aufgezeichneten Befehlen, zusammengefügt werden (203-210), um die Sequenz zusammenzustellen.

2. Verfahren nach Anspruch 1, **dadurch gekennzeichnet, dass** die erste Datei Audiodaten enthält.

3. Verfahren nach einem der Ansprüche 1 oder 2, **dadurch gekennzeichnet, dass** die erste Datei Videodaten enthält.

4. Verfahren nach einem der Ansprüche 1 bis 3, **dadurch gekennzeichnet, dass** die zweite Datei einen Befehl (203) enthält, um die erste Datei zu spezifizieren.

5. Verfahren nach einem der Ansprüche 1 bis 4, **dadurch gekennzeichnet, dass** die zweite Datei mindestens einen Einfügebefehl (204) enthält, welcher einen Teil der ersten Datei beschreibt, der aus dieser ersten Datei zu extrahieren ist, um ihn in die erzeugte Sequenz einzufügen.

6. Verfahren nach Anspruch 5, **dadurch gekennzeichnet, dass** ein Teil der ersten Datei durch einen Anfangszeitpunkt und einen Endzeitpunkt beschrieben wird.

7. Verfahren nach Anspruch 5, **dadurch gekennzeichnet, dass** ein Teil der ersten Datei durch einen Anfangszeitpunkt und eine Dauer mit Bezug auf diesen Anfangszeitpunkt beschrieben wird.

8. Verfahren nach einem der Ansprüche 5 bis 7, **dadurch gekennzeichnet, dass** die zweite Datei einen Befehl enthält, um Dimensionen zu spezifizieren, gemäß derer der Inhalt des Teils der ersten Datei anzuzeigen ist.

9. Verfahren nach einem der Ansprüche 1 bis 8, **dadurch gekennzeichnet, dass** mehrere Einfügebefehle gleichzeitig ausgeführt werden.

10. Verfahren nach einem der Ansprüche 5 bis 9, **dadurch gekennzeichnet, dass** die zweite Datei einen Befehl enthält, um Koordinaten zu spezifizieren, gemäß derer der Inhalt des Teils der ersten Datei anzuzeigen ist.

11. Verfahren nach einem der Ansprüche 1 bis 10, **dadurch gekennzeichnet, dass** die zweite Datei einen Befehl enthält, um ein Bild der ersten Datei anzuzeigen.

12. Verfahren nach Anspruch 11, **dadurch gekennzeichnet, dass** ein Befehl zum Anzeigen eines Bildes Parameter enthält, welche die Größe des Bildes und seine Position auf einem Bildschirm definieren.

13. Verfahren nach einem der Ansprüche 1 bis 12, **dadurch gekennzeichnet, dass** die zweite Datei einen Synchronisationsbefehl enthält, um die Ausführung der Befehle zu takten.

14. Verfahren nach einem der Ansprüche 1 bis 13, **dadurch gekennzeichnet, dass** die zweite Datei mehrere Befehle enthält, die sequentiell, in der Reihenfolge ihres Erscheinens in der zweiten Datei, ausgeführt werden.

15. Verfahren nach einem der Ansprüche 1 bis 14, **dadurch gekennzeichnet, dass** die erzeugte Sequenz in einer dritten Datei aufgezeichnet wird.

16. Verfahren nach einem der Ansprüche 1 bis 15, **dadurch gekennzeichnet, dass** die erzeugte Sequenz direkt auf einem Bildschirm visualisiert wird.

17. Vorrichtung zum Empfangen/Decodieren von Fernsehsignalen, welche das Verfahren nach einem der Ansprüche 1 bis 16 ausführt.

## Claims

1. Method (201 - 211) for production of an audio or video sequence in which:
- on a storage support (109) is recorded at least a first file containing audio or video data depending on the nature of the sequence which is wished to be produced,
**characterised by** the fact that:
- in a memory (110) is recorded a second script file of instructions describing the sequence to be produced,
- pieces of at least the first file are extracted (204 - 208), in accordance with the instructions recorded in the second file,
- the extracted pieces are assembled (203 - 210), in accordance with the instructions recorded in the second file, to compose the sequence.

2. Method as described in claim 1, **characterised by** the fact that the first file contains audio data.

3. Method as described in one of claims 1 or 2, **characterised by** the fact that the first file contains video data.

4. Method as described in one of claims 1 to 3, **characterised by** the fact that the second file contains an instruction (203) to specify the first file.

5. Method as described in one of claims 1 to 4, **characterised by** the fact that the second file contains at least one introduction instruction (204) describing a piece of the first file to be extracted from this first file for its introduction into the sequence produced.

6. Method as described in claim 5, **characterised by** the fact that a piece of the first file is described by a start date and an end date.

7. Method as described in claim 5, **characterised by** the fact that a piece of the first file is described by a start date and a period relative to this start date.

8. Method as described in one of claims 5 to 7, **characterised by** the fact that the second file contains an instruction to specify dimensions in accordance with which to display the content of the piece of the first file.

9. Method as described in one of claims 1 to 8, **characterised by** the fact that a plurality of introduction instructions is executed at the same time.

10. Method as described in one of claims 5 to 9, **characterised by** the fact that the second file contains an instruction to specify coordinates in accordance with which to display the content of the piece of the first file.

11. Method as described in one of claims 1 to 10, **characterised by** the fact that the second file contains an instruction to display an image from the first file.

12. Method as described in claim 11, **characterised by** the fact that one instruction to display an image includes parameters defining the dimension of the image and its position on a screen.

13. Method as described in one of claims 1 to 12, **characterised by** the fact that the second file contains a synchronisation instruction to time the execution of the instructions.

14. Method as described in one of claims 1 to 13, **characterised by** the fact that the second file contains a plurality of instructions executed sequentially, in their order of appearance in the second file.

15. Method as described in one of claims 1 to 14, **characterised by** the fact that the sequence produced is recorded in a third file.

16. Method as described in one of claims 1 to 15, **characterised by** the fact that the sequence produced is viewed directly on a screen.

17. Television signal reception/decoding device implementing the method as described in one of claims 1 to 16.
